# EUROPEAN PATENT SPECIFICATION

(11) **EP 1 125 709 B1**
(45) Date of publication and mention of the grant of the patent: **17.03.2004**
(21) Application number: 99926876.6
(22) Date of filing: 01.07.1999
(51) Int. Cl.: B29C 35/02, B29C 33/02, B29C 33/42

(54) **MOLD FOR VULCANIZATION AND TIRE VULCANIZATION METHOD**
VULKANISIERFORM UND VERFAHREN ZUM VULKANISIEREN VON REIFEN
MOULE DE VULCANISATION ET PROCEDE DE VULCANISATION DE PNEUS

(43) Date of publication of application: 22.08.2001
(73) Proprietor: BRIDGESTONE CORPORATION, Tokyo 104-0031 (JP)
(72) Inventor: ISHIYAMA, Makoto, Kodaira-shi, Tokyo 187-0004 (JP)
(74) Representative: Whalley, Kevin
(86) International application number: PCT/JP1999/003550
(87) International publication number: WO 2001/002147

(56) References cited:
- FR-A- 2 763 892
- FR-A- 2 772 663
- JP-A- 8 142 057
- US-A- 1 666 883
- US-A- 1 733 064

## Description

The present invention relates to a mold for vulcanization and a method of vulcanizing a tire by which a pneumatic tire, which has a tread having land portions such as blocks, ribs and the like in which are formed recessed portions such as grooves, sipes, holes or the like, is vulcanization molded.

Properties of a pneumatic tire are influenced by the configurations of various grooves or sipes formed in the tread portion.

However, a mold is used at the time of vulcanization during a step of manufacturing the tire, and treads of a configuration which does not allow the tire to be removed from the mold cannot be designed.

On the other hand, when it becomes possible to manufacture land portions such as blocks or ribs having recessed portions such as grooves, sipes or holes which do not appear at the ground-contact surface when the tire is new but appear when the tire has been worn to a certain extent, the breadth of design is increased, such as the groove volume, which decreases as the tire becomes worn, can be made to not decrease even if the tire is worn, and the land portion, whose behavior becomes hard when the tire is worn, can be made to remain flexiblity of the land portion even if the tire is worn, and high-ground contact pressure at limited land portion can be effectively lowered.

In the case of a sipe as an example, there has been proposed a tire which is provided with the feature that a forked sipe forming member (a so-called blade) is embedded such that the number of sipes is increased after the tire is worn.

However, at the time a vulcanized tire is removed, the sipe forming member tends to catch on the vulcanized tire such that problems in the manufacturing of the tire arise.

Attention is also drawn to the disclosure of FR-2772663A.

In view of the above-described circumstances, an object of the present invention is to provide a mold for vulcanization and a method of vulcanizing a tire which enable molding of a pneumatic tire which, for example, has land portions provided with recessed portions such as grooves, sipes, holes or the like which appear after the tire has been worn to a certain extent, such a tire having been difficult to manufacture conventionally.

The present invention in one aspect provides a mold for vulcanization having, at the inner peripheral surface thereof, a recessed portion for forming a land portion in a tread portion of a tire, comprising:
a hole opening at a wall surface of said recessed portion;
a through hole forming member, which is provided so as to be able to protrude from said hole toward an inner side of said recessed portion, for forming a through hole passing through the land portion; and
driving means for driving said through hole forming member to come in and out through said hole with respect to said recessed portion.

In the mold for vulcanization, a tire is vulcanized in a state in which the through hole forming member is protruded from the hole, which opens at a wall surface of the recessed portion forming a land portion, toward the inner side of the recessed portion. After vulcanization is completed, the through hole forming member is pulled out from the recessed portion and the tire is removed, and a recessed portion is formed in the land portion in the tread of the tire.

In a conventional mold for vulcanization, when a sipe is formed in a land portion, a metal plate which is called a blade (the through hole forming member in the present invention) is fixed to the inner peripheral surface. Thus, the blade must be provided such that the tire does not catch on the blade at the time the vulcanized tire is removed.

However, in the mold for vulcanization of the present invention, since the through hole forming member can be pulled out from the recessed portion forming a land portion, the through hole forming member does not catch on the tire at the time the tire is removed. Accordingly, a pneumatic tire which, for example, has land portions provided with recessed portions such as grooves, sipes, holes or the like which appear after the tire has been worn to a certain extent can be molded easily.

The invention in another aspect provides a mold for vulcanizing a tire for obtaining a tire having a tread having a land portion in which a recessed portion is formed,
wherein by using a mold for vulcanization provided with a recessed portion for forming a land portion at the inner peripheral surface of said mold, a hole opening at a wall surface of said recessed portion, and a through hole forming member, which is provided so as to be able to protrude from said hole toward an inner side of said recessed portion, for forming a through hole passing through the land portion, said through hole forming member is made to protrude from said hole toward the inner side of said recessed portion prior to vulcanization of the tire, and said through hole forming member is pulled out from the tire after vulcanization of the tire is completed.

In this method of vulcanizing a tire, the through hole forming member is protruded through the hole toward the inner side of the recessed portion forming a land portion, prior to vulcanization of the tire.

Therefore, there is a state in which the through hole forming member is inserted in a land portion of an unvulcanized tire.

When the through hole forming member is pulled out from the tire after vulcanization of the tire is completed, a recessed portion is formed in a land portion of the vulcanized tire at the portion from which the through hole forming member has been pulled out.

When the hole is formed in a side wall surface of the recessed portion forming a land portion, a recessed portion which does not appear at the ground-contact surface of a land portion of a new tire can be formed, whereas when the hole is formed in a bottom portion of the recessed portion forming a land portion, a recessed portion which appears at the ground-contact surface of a land portion of a new tire can be formed.

The invention will be further described with reference to the accompanying drawings, in which:
Fig. 1 is a cross-sectional view of a mold for vulcanization relating to a first embodiment of the present invention.
Fig. 2 is a perspective view showing a portion of the mold for vulcanization relating to the first embodiment of the present invention.
Fig. 3 is a view, partially in cross section, of a vicinity of blade holding gears of the mold for vulcanization.
Fig. 4 is a diagram for explanation showing an initial state of the blade holding gears.
Fig. 5 is a diagram for explanation showing a state of the blade holding gears at the time of vulcanization.
Fig. 6 is a diagram for explanation showing the blade holding gears in a state in which blades have been pulled out.
Fig. 7 is a diagram for explanation showing a state in which a tire has been removed.
Fig. 8 is a perspective view of a block in which a sipe is formed.
Fig. 9 is a view, partially in cross section, of a vicinity of blade holding gears of a mold for vulcanization relating to a second embodiment of the present invention.
Fig. 10 is a perspective view showing ring gears and a driving mechanism thereof.
Fig. 11 is a perspective view showing a mold for vulcanization relating to a third embodiment of the present invention.
Fig. 12 is a cross-sectional view of main portions of the mold for vulcanization relating to the third embodiment of the present invention.
Fig. 13 is a perspective view of a block of a pneumatic tire formed by using the mold for vulcanization relating to the third embodiment of the present invention.
Fig. 14 is a view, partially in cross section, of main portions of a mold for vulcanization relating to another embodiment.
Fig. 15 is a perspective view of a block of a pneumatic tire formed by using the mold for vulcanization illustrated in Fig. 14.
Fig. 16 is a perspective view of a block of a pneumatic tire formed by using a mold for vulcanization relating to yet another embodiment.
Fig. 17 is a perspective view of a block of a pneumatic tire formed by using a mold for vulcanization relating to yet another embodiment.

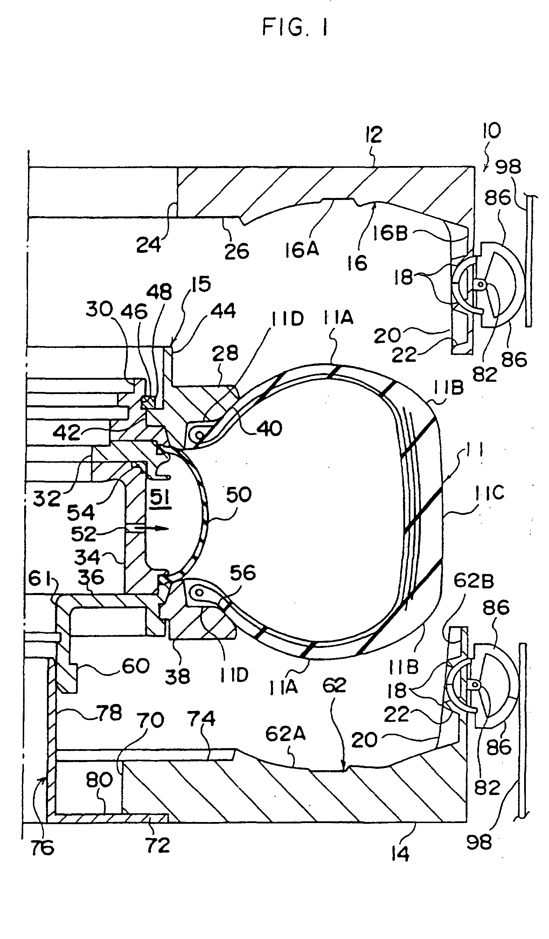

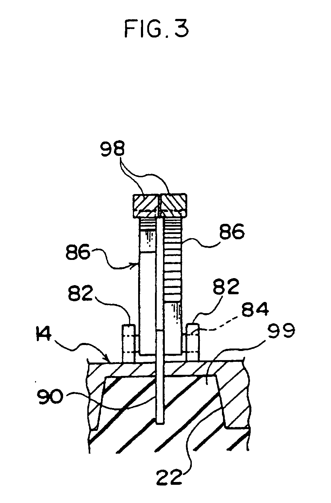

A first embodiment of a mold for vulcanization of the present invention will be described in accordance with Fig. 1 through Fig. 8.

As illustrated in Fig. 1, a mold 10 for vulcanization includes a top half 12, a bottom half 14 and a shaping ring 15.

A recessed portion 16 is formed in the top half 12. A bottom surface 16A of the recessed portion 16 is a contour forming surface of one sidewall 11A and shoulder portion 11B of a tire 11. Further, a wall portion 16B of the recessed portion 16 is a tread contour forming surface for forming one side, with the equatorial plane as a border, of a tread portion 11C of the tire 11. A plurality of protrusions 18 which form circumferential direction grooves and a plurality of protrusions 20 which form transverse grooves are formed at the wall portion 16B. A recessed portion 22 forming a land portion, which is defined by the protrusions 18 and the protrusions 20, forms a block in the tread portion 11C of the tire 11.

A circular hole 24 is formed in a central portion of the top half 12. An annular recessed portion 26 is formed coaxially with the circular hole 24 at the recessed portion 16 side of the top half 12.

The shaping ring 15 is formed by bead rings 28, 30, 32, 34, 36, 38. A contour forming surface 40, which corresponds to the contour of a bead portion 11D of the tire 11, is formed at the lower side of the outer periphery of the bead ring 28, and an annular protrusion 42 is provided at the inner periphery. Further, a cylindrical guide 44 is provided at the upper side of the bead ring 28. The outer diameter of the cylindrical guide 44 is a predetermined dimension smaller than the inner diameter of the circular hole 24 of the top half 12.

The bead ring 30 is engaged with the bead ring 28 at the inner side thereof. An annular groove 46 is formed at the outer periphery of the bead ring 30. Due to the bead ring 30 engaging with the bead ring 28 and a C-shaped ring 48 engaging with the annular groove 46, the bead ring 30 and the bead ring 28 can be fixed together. The bead ring 32, the bead ring 34, the bead ring 36 and the bead ring 38 are disposed in that order below the bead ring 30, and are fixed together by a fixing means such as a screw or the like (not shown).

A cylindrical bladder 50, which is thin and formed from rubber, is disposed between the bead ring 30 and the bead ring 36. The upper edge of the bladder 50 is nipped and fixed by the bead ring 30 and the bead ring 32, and the lower edge is nipped and fixed by the bead ring 34 and the bead ring 36.

A heated fluid (not shown) is supplied, via a hole 52 formed in the bead ring 34, to a space portion 51 enclosed by the bladder 50 and the bead rings 32, 34. Packing 54 is disposed between the bead ring 32 and the bead ring 34, and the gap between the bead ring 32 and the bead 34 is sealed thereby.

A contour forming surface 56, which corresponds to the contour of another bead portion 11D of the tire 11, is formed at the upper side of the outer periphery of the bead ring 38. A cylindrical portion 60 serving as a first engagement portion is formed so as to protrude at the lower side of the bead ring 36.

In the same way as at the top half 12, a recessed portion 62 is formed at the bottom half 14. A bottom surface 62A of the recessed portion 62 is a contour forming surface for forming another sidewall 11A and shoulder portion 11B of the tire. A wall portion 62B of the recessed portion 62 is a tread contour forming surface for forming another side, with the equatorial plane as a border, of the tread portion 11C of the tire 11. In the same way as at the top half 12, a plurality of the protrusions 18 which form circumferential direction grooves and a plurality of the protrusions 20 which form transverse grooves are formed at the wall portion 62B. The recessed portion 22 for forming a land portion is defined by the protrusions 18 and the protrusions 20.

A circular hole 70 is formed in the bottom half 14 coaxially with the recessed portion 62. An annular recessed portion 72 is formed in the bottom surface of the bottom half 14 coaxially with the circular hole 70. An annular recessed portion 74 is formed at the side of the recessed portion 62 on the bottom half 14 coaxially with the circular hole 70.

A cylindrical portion 78 of a ring guide 76 is disposed within the circular hole 70 so as to project within the bottom half 14. A flange portion 80 is formed at the lower end portion of the cylindrical portion 78, and the flange portion 80 is fixed to the annular recessed portion 72. The cylindrical portion 78 is inserted into a hole 61 of the cylindrical portion 60.

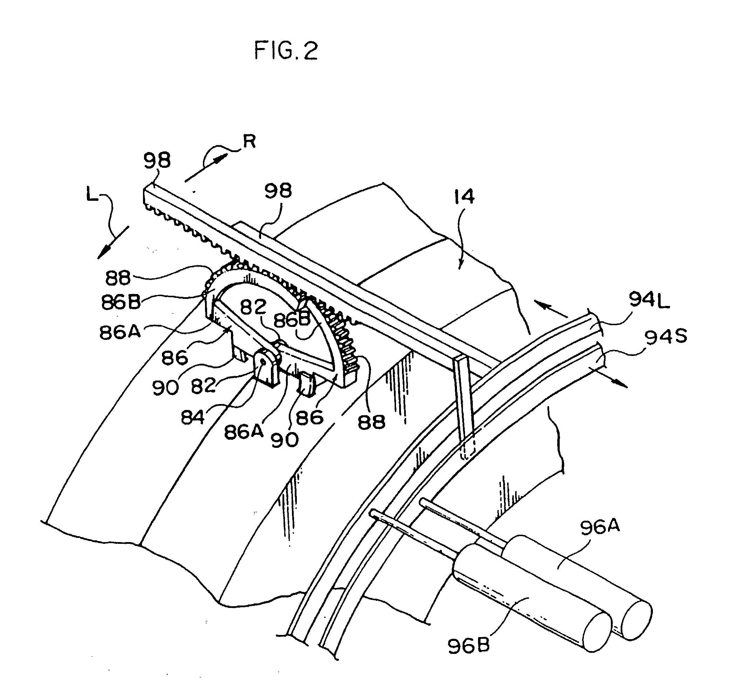

As illustrated in Fig. 1 and Fig. 2, a plurality of bearings 82 are formed along the peripheral direction at the outer peripheral surfaces of the top half 12 and the bottom half 14.

In the present embodiment, the bearings 82 are disposed with respect to the recessed portion 22 forming a land portion which is the second recessed portion 22 as counted from the tire transverse direction outer side toward the inner side.

As illustrated in Figs. 2 through 4, a shaft 84, which extends in a direction tangent to the outer peripheral surface of the bottom half 14, is attached to the bearings 82. Two blade holding gears 86 are supported so as to be freely rotatable on the shaft 84.

The blade holding gear 86 comprises an arm portion 86A, which extends outward in the radial direction from the shaft 84, and a circular arc portion 86B formed integrally with the arm portion 86A at a tip side thereof. A gear 88 is formed at the outer peripheral side of the circular arc portion 86B.

A thin blade 90 formed in a circular arc shape is attached to the intermediate portion of the arm portion 86A.

Further, the center of curvature of the circular arc portions 86B and the blades 90 coincides with the center of rotation of the shaft 84.

As illustrated in Fig. 2, the two blade holding gears 86 are supported so as to be directed in opposite directions.

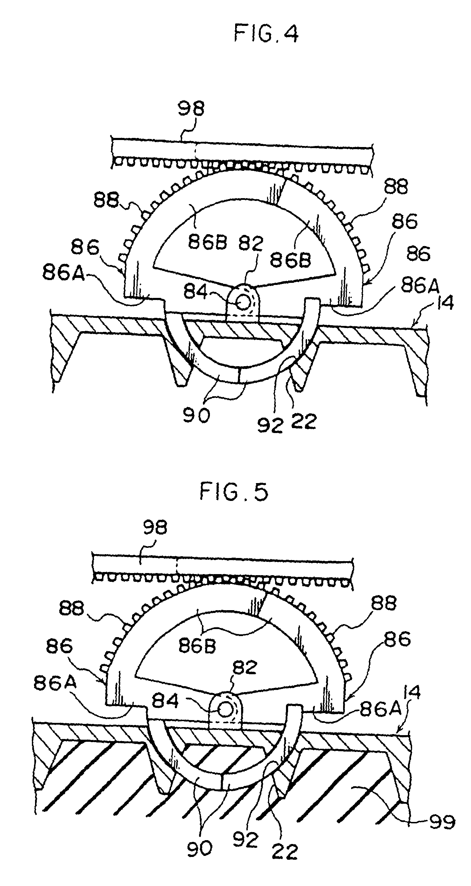

As illustrated in Fig. 4, circular arc-shaped blade inserting holes 92, which pass completely through from the outer peripheral surface to a side wall surface of the recessed portion 22 forming a land portion, are formed in the top half 12 and the bottom half 14, so that the above-described blades 90 freely come in and out of the blade inserting holes 92.

As illustrated in Fig. 2, a smaller movement ring 94S and a larger movement ring 94L are disposed at the axial direction outer sides of the top half 12 and the bottom half 14 (only those on one side are illustrated in Fig. 2). The smaller movement ring 94S is attached to a cylinder 96A and is movable in the axial direction, whereas the larger movement ring 94L is attached to a cylinder 96B and is movable in the axial direction.

A rack 98 is attached to each of the smaller movement ring 94S and the larger movement ring 94L, and each rack extends in the axial direction.

The rack 98 attached to the smaller movement ring 94S meshes with the gear 88 of the blade holding gear 86 positioned at the side in the direction indicated by arrow L in Fig. 2, whereas the rack 98 attached to the larger movement ring 94L meshes with the gear 88 of the blade holding gear 86 positioned at the side in the direction indicated by arrow R in Fig. 2.

Operation of the present embodiment will be described hereinafter.

Before placing the green tire 11 in the mold 10 for vulcanization, tip portions of the two blades 90 are made to contact each other as illustrated in Fig. 4.

Then, each bead portion 11D of the green tire 11 is supported by the bead ring 28 and the bead ring 38 as illustrated in Fig. 1. The top half 12 and the bottom half 14 are set together, a heated fluid is supplied into the bladder 50 to expand the bladder 50, and the top half 12 and the bottom half 14 are heated.

As the bladder 50 expands, the bladder 50 pushes the tire 11 by applying pressure from the inner side, and rubber 99 on the outer surface of the green tire 11 contacts the inner surfaces of the top half 12 and the bottom half 14 (see Fig. 5).

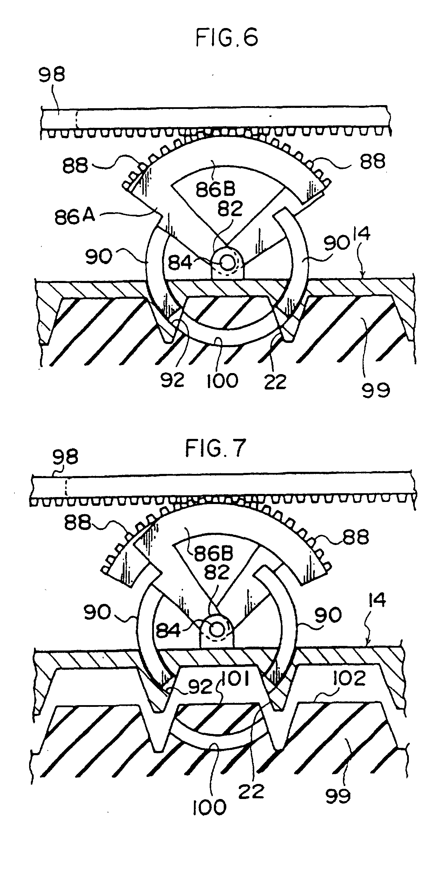

When a predetermined amount of time passes after vulcanization of the tire 11 is completed, the smaller movement ring 94S and the larger movement ring 94L are caused to move in directions opposite to each other (in the directions indicated by arrows in Fig. 2), thereby pulling out the blades 90 from the recessed portions 22 for forming a land portion as illustrated in Fig. 6. Then, the top half 12 and the bottom half 14 are separated and the vulcanized tire 11 is removed (see Fig. 7).

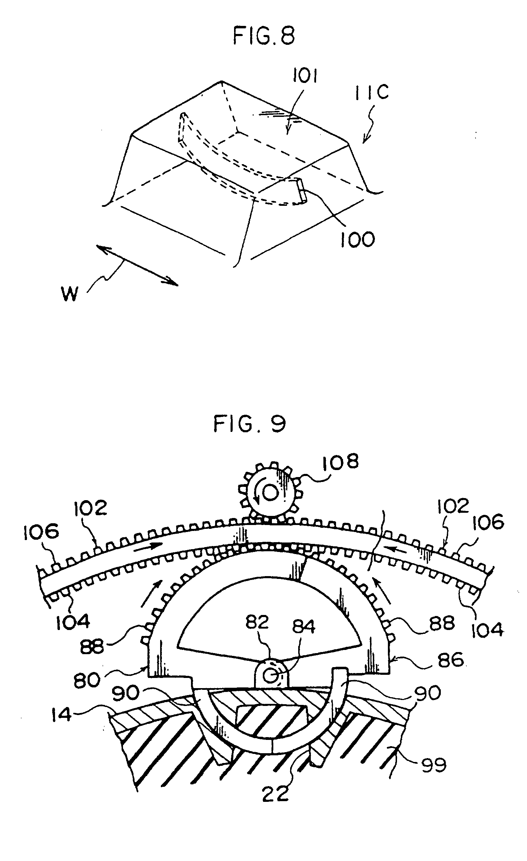

A sipe 100, which does not appear at the ground-contact surface and which is parallel to the tire transverse direction (the direction indicated by arrow W in Fig. 8) and which extends in a circular arc shape, is formed in a block 101 of the tread portion 11C of the tire 11 as illustrated in Fig. 8.

Generally, as a tire becomes worn, the groove volume of circumferential direction grooves and lug grooves decreases and wet properties deteriorate. However, when the tire 11 molded by the mold 10 for vulcanization of the present embodiment has been worn to a certain extent, the sipes 100 appear at the ground-contact surface, thereby enabling prevention of deterioration of the wet properties.

Further, as a tire is worn and the height of the block of the tire is decreased, rigidity of the block increases. However, when the block 101 of the tire 11 molded by the mold 10 for vulcanization of the present embodiment has been worn to a certain extent, the block 101 is split by means of the sipe 100 which appears at the ground-contact surface; thereby enabling suppression of an increase in block rigidity as the block becomes worn.

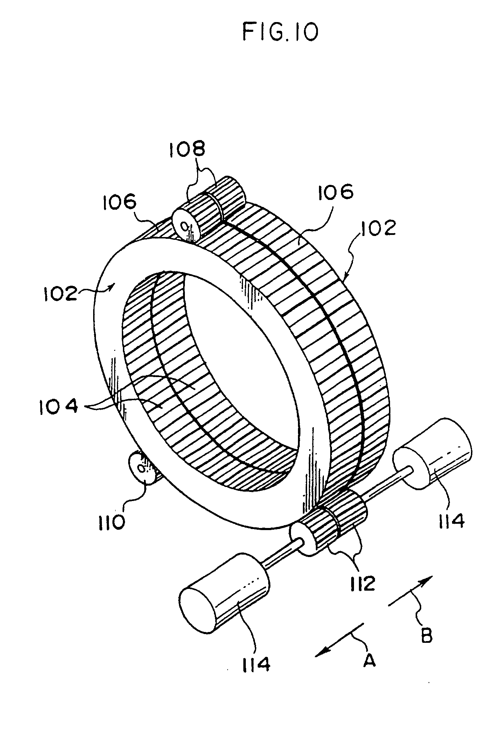

A second embodiment of a mold for vulcanization of the present invention will be described in accordance with Fig. 9 and Fig. 10. The same reference numerals are used to designate elements which are the same as those in the first embodiment, and detailed description thereof will be omitted.

In the second embodiment, the blade holding gears 86 are provided such that the direction of the gears 86 is changed by 90° from that in the first embodiment.

As illustrated in Fig. 9 and Fig. 10, a pair of ring gears 102 are disposed at the radial direction outer sides of the top half 12 and the bottom half 14 (not shown in Fig. 10). A gear 104 is formed at the inner periphery of each ring gear 102, and a gear 106 is formed at the outer periphery of each ring gear 102.

The ring gears 102 are supported so as to be freely rotatable by pinions 108,110,112 which engage with the gears 106. The pinions 112 are rotated by motors 114.

The gear 104 of the ring gear 102 at the side indicated by arrow A in Fig. 10 meshes with the gear 88 of the blade holding gear 86 toward the front of the drawing of Fig. 9, whereas the gear 104 of the ring gear 102 at the side indicated by arrow B in Fig. 10 meshes with the gear 88 of the blade holding gear 86 toward the rear of the drawing of Fig. 9.

In the present embodiment, by rotating the ring gears 102 in opposite directions, the blade holding gears 86 are rotated in opposite directions, so that the blades 90 come in and out of the recessed portions 22 for forming a land portion.

According to the present embodiment, a sipe, which extends along the tire circumferential direction, can be formed in the block of the tire 11.

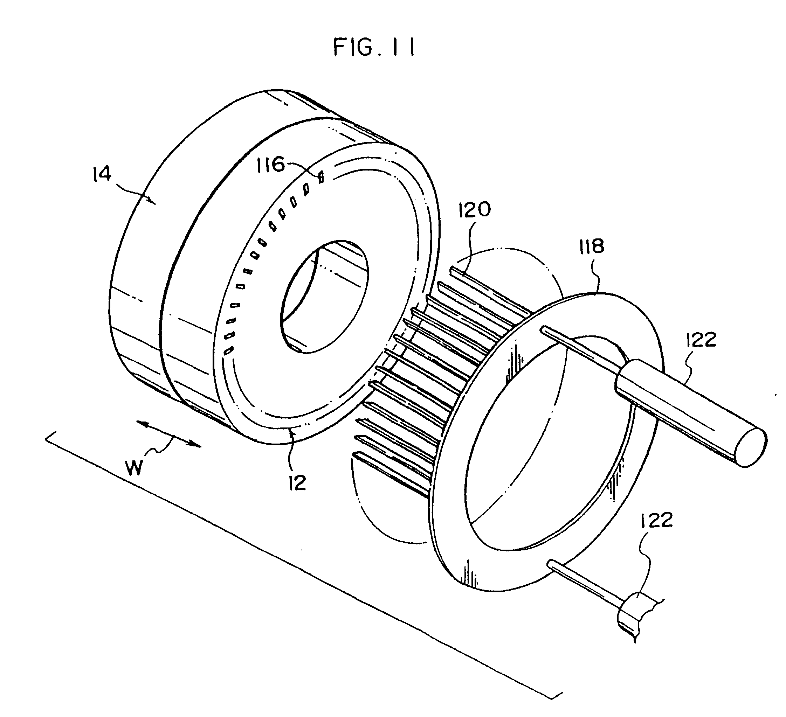

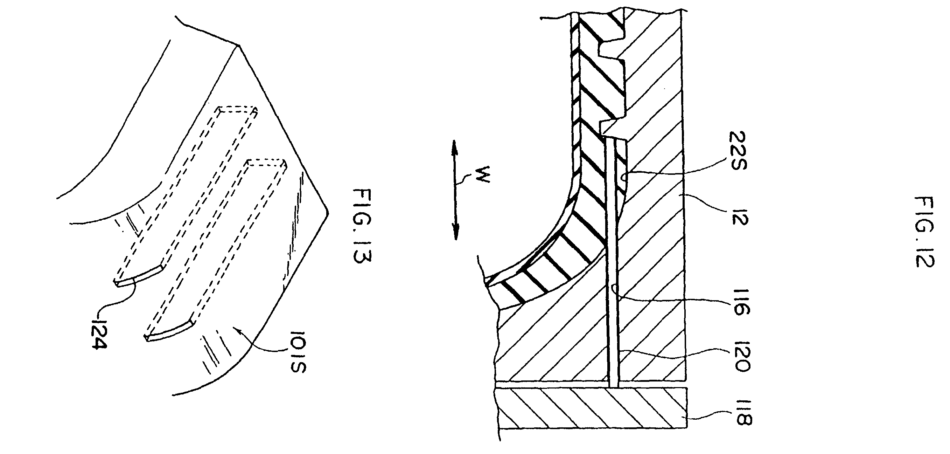

A third embodiment of a mold for vulcanization of the present invention will be described in accordance with Fig. 11 and Fig. 12. The same reference numerals are used to designate elements which are the same as those in the above-described embodiments, and detailed description thereof will be omitted.

As illustrated in Fig. 11, a plurality of extending slit-shaped holes 116 are radially formed at the both sides in the axial direction of the top half 12 and the bottom half 14.

As illustrated in Fig. 12, the hole 116 is formed linearly along the axial direction (the direction indicated by arrow W), and passes completely through to the side wall surface of a recessed portion 22S for forming a land portion, which forms a block on the shoulder side of the tire 11.

Ring-shaped blade holding plates 118 are disposed at the both sides in the axial direction of the top half 12 and the bottom half 14. A plurality of blades 120, which extend linearly along the axial direction such that the blades 120 can come in and out of the holes 116, are attached to the blade holding plate 118. The blade holding plate 118 is movable in the axial direction by means of cylinders 122.

According to the present embodiment, the tire 11 is vulcanized in a state in which the blade 120 is inside the recessed portion 22S for forming a land portion as illustrated in Fig. 12. After vulcanization, the blade 120 is pulled out, and the tire 11 is removed.

According to the present embodiment, sipes 124, which extend along the tire transverse direction (the direction indicated by arrow W), can be formed in a block 101S on the shoulder side of the tire 11 as illustrated in Fig. 13.

Although the above-described embodiments describe a case in which sipes are formed in blocks, sipes may be formed in ribs as well.

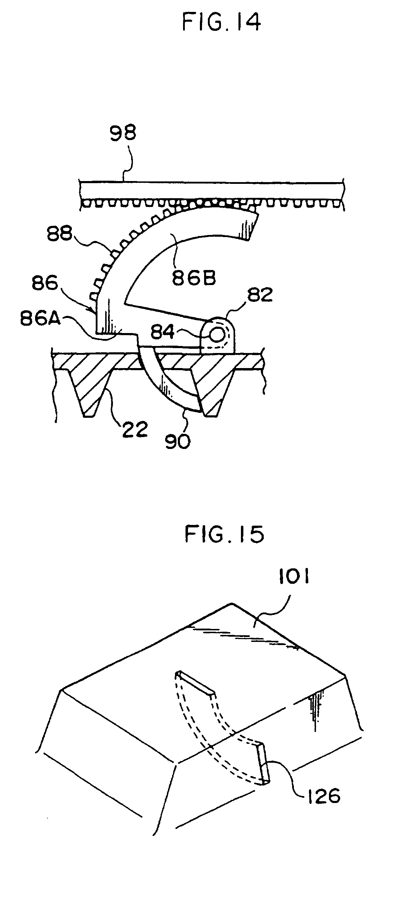

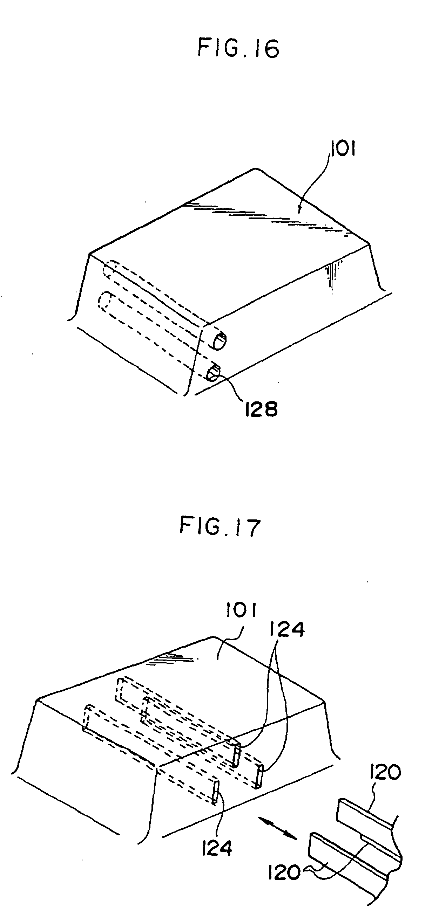

Further, by modifying the position of the blade holding gear 86 as illustrated in Fig. 14, a sipe 126, which passes from the ground-contact surface to the side surface as illustrated in Fig. 15, can also be formed in the block 101.

Still further, although the above-described embodiments describe cases in which sipes are formed, the present invention is not limited to the same, and various holes can be formed instead. For example, by using rod-like members in place of the thin blades 120, holes 128 such as illustrated in Fig. 16 can also be formed in the block 101.

When the holes 128 are formed at the leading edge side of the block 101, rigidity at the leading edge side is lowered, thereby enabling a reduction in the striking sound at the time the leading edge of the block 101 contacts the ground.

Moreover, by forming the holes 128, heat dissipation at that portion can be improved, so that an increase in temperature can be suppressed.

As an example of a modified version of the third embodiment, it is possible to increase the number of sipes as the tire is worn, by using a plurality of blades 120 which are placed in different levels in the block height direction as illustrated in Fig. 17.

Further, the blades 90,120 of the above-described embodiments can be used in combination with conventional blades fixedly provided on the mold.

Still further, it is preferable that the blades 90,120 have a tapered shape which tapers toward the tip, thereby enabling the blades 90,120 to be pulled out easily from the vulcanized tire 11.

As described above, the mold for vulcanization according to the present invention is suitable for molding a pneumatic tire, which comprises land portions provided with recessed portions such as grooves, sipes, holes or the like, which appear when the tire has been worn to a certain extent.

Also, the method of vulcanizing a tire according to the present invention is suitable for molding a pneumatic tire, which comprises land portions provided with recessed portions such as grooves, sipes, holes or the like, which appear when the tire has been worn to a certain extent.

## Claims

1. A mold for vulcanization having, at the inner peripheral surface thereof, a recessed portion (22) for forming a land portion (101) in a tread portion of a tire, comprising:
a hole (92) opening at a wall surface of said recessed portion (22);
a through hole forming member (90), which is provided so as to be able to protrude from said hole (92) toward an inner side of said recessed portion (22), for forming a through hole (100) passing through the land portion (101); and
driving means for driving said through hole forming member (90) to come in and out through said hole (92) with respect to said recessed portion (22).

2. A mold for vulcanization as claimed in claim 1, **characterized in that** said through hole forming member (90) has a thin plate shape whose direction of thickness is a direction intersecting a ground-contact surface.

3. A mold for vulcanization as claimed in claim 1 or 2, **characterized in that** said through hole forming member (90) and said hole (92) extend in a circular arc shape.

4. A mold for vulcanization as claimed in any of claims I to 3, **characterized in that** said hole (92) is open at a side wall surface of said recessed portion (22).

5. A mold for vulcanization as claimed in any of claims 1 to 3, **characterized in that** said hole (92) is open at a bottom surface of said recessed portion (22).

6. A mold for vulcanization as claimed in any of claims 1 to 5, **characterized in that** said through hole forming member (90) is provided parallel to the equatorial plane of said tire.

7. A mold for vulcanization as claimed in any of claims 1 to 5, **characterized in that** said through hole forming member (90) is provided parallel to a plane passing along the tire axial direction.

8. A mold for vulcanization as claimed in any of claims 1 to 7, **characterized in that** said driving means is provided at an outer surface side of the mold for vulcanization.

9. A mold for vulcanization as claimed in any of claims 1 to 8, **characterized in that** said holes are formed respectively in different wall surfaces of said recessed portion (22).

10. A method for vulcanizing a tire for obtaining a tire having a tread having a land portion (101) in which a recessed portion (22) is formed,
wherein by using a mold for vulcanization provided with a recessed portion (22) for forming a land portion at the inner peripheral surface of said mold, a hole (92) opening at a wall surface of said recessed portion, and a through hole forming member (90), which is provided so as to be able to protrude from said hole (92) toward an inner side of said recessed portion (22), for forming a through hole (100) passing through the land portion (101), said through hole forming member (90) is made to protrude from said hole (92) toward the inner side of said recessed portion (22) prior to vulcanization of the tire, and said through hole forming member (90) is pulled out from the tire after vulcanization of the tire is completed.

11. A method as claimed in claim 10, **characterized in that** said through hole forming member (90) moves linearly.

12. A method as claimed in claim 10, **characterized in that** said through hole forming member (90) moves along a circular arc form.

13. A method a claimed in any of claims 10 to 12, **characterized in that** said hole (92) is provided at a tire side surface side of said mold for vulcanization.

14. A method as claimed in any of claims 10 to 12, **characterized in that** said hole (92) is provided at a tire tread side of said mold for vulcanization.

## Patentansprüche

1. Form zur Vulkanisation, die an einer inneren Umfangsfläche davon einen vertieften Abschnitt (22) zum Bilden eines Landabschnitts (101) in einem Laufflächenabschnitt eines Reifens besitzt, umfassend:
ein Loch (92), das an einer Wandfläche des vertieften Abschnitts (22) mündet;
ein durchgangslochbildendes Element (90), das derart vorgesehen ist, um in der Lage zu sein, von dem Loch (92) zu einer inneren Seite des vertieften Abschnitts (22) hervorzustehen, zum Bilden eines Durchgangslochs (100), das durch den Landabschnitt (101) passiert; und
eine Antriebseinrichtung zum Antreiben des durchgangslochbildenden Elements, um in Bezug auf den vertieften Abschnitt (22) in das Loch (92) hinein und aus diesem herauszukommen.

2. Form zur Vulkanisation nach Anspruch 1, **dadurch gekennzeichnet, dass** das durchgangslochbildende Element (90) die Form einer dünnen Platte besitzt, deren Dickenrichtung eine Richtung ist, die eine Bodenkontaktfläche schneidet.

3. Form zur Vulkanisation nach Anspruch 1 oder 2, **dadurch gekennzeichnet, dass** das durchgangslochbildende Element (90) und das Loch (92) sich in der Form eines Kreisbogens erstrecken.

4. Form zur Vulkanisation nach einem der Ansprüche 1 bis 3, **dadurch gekennzeichnet, dass** das Loch (92) an einer Seitenwandfläche des vertieften Abschnitts (22) offen ist.

5. Form zur Vulkanisation nach einem der Ansprüche 1 bis 3, **dadurch gekennzeichnet, dass** das Loch (92) an einer Bodenfläche des vertieften Abschnitts (22) offen ist.

6. Form zur Vulkanisation nach einem der Ansprüche 1 bis 5, **dadurch gekennzeichnet, dass** das durchgangslochbildende Element (90) parallel zu der Äquatorebene des Reifens vorgesehen ist.

7. Form zur Vulkanisation nach einem der Ansprüche 1 bis 5, **dadurch gekennzeichnet, dass** das durchgangslochbildende Element (90) parallel zu der Ebene vorgesehen ist, welche entlang der Reifenaxialrichtung verläuft.

8. Form zur Vulkanisation nach einem der Ansprüche 1 bis 7, **dadurch gekennzeichnet, dass** die Antriebseinrichtung auf einer Seite einer äußeren Oberfläche der Form zur Vulkanisation vorgesehen ist.

9. Form zur Vulkanisation nach einem der Ansprüche 1 bis 8, **dadurch gekennzeichnet, dass** die Löcher jeweils in unterschiedlichen Wandflächen des vertieften Abschnitts (22) vorgesehen sind.

10. Verfahren zum Vulkanisieren eines Reifens zum Erhalten eines Reifens, der eine Lauffläche besitzt, welche einen Landabschnitt (110) besitzt, in welchem ein vertiefter Abschnitt (22) gebildet ist,
wobei durch Verwenden einer Form zur Vulkanisation, die mit einem vertieften Abschnitt (22) zum Bilden eines Landabschnitts an der inneren Umfangsfläche der Form, einem an einer Wandfläche des vertieften Abschnitts mündenden Loch (92) und einem durchgangslochbildenden Element (90), das derart vorgesehen ist, um in der Lage zu sein, von dem Loch (92) zu einer inneren Seite des vertieften Abschnitts (22) hervorzustehen, ausgestattet ist, zum Bilden eines durch den Landabschnitt (101) passierendes Durchgangsloch (100) das durchgangslochbildende Element (90) veranlasst wird, von dem Loch (92) zu der inneren Seite des vertieften Abschnitts (22) vor der Vulkanisation des Reifens hervorzustehen, und das durchgangslochbildende Element (90) wird von dem Reifen herausgezogen, nachdem die Vulkanisation des Reifens abgeschlossen ist.

11. Verfahren nach Anspruch 10, **dadurch gekennzeichnet, dass** sich das durchgangslochbildende Element (90) linear bewegt.

12. Verfahren nach Anspruch 10, **dadurch gekennzeichnet, dass** das durchgangslochbildende Element (90) sich entlang einer Form eines Kreisbogens bewegt.

13. Verfahren nach einem der Ansprüche 10 bis 12, **dadurch gekennzeichnet, dass** das Loch (92) auf der Seite einer Reifenseitenfläche der Form zur Vulkanisation vorgesehen ist.

14. Verfahren nach einem der Ansprüche 10 bis 12, **dadurch gekennzeichnet, dass** das Loch (92) auf der Seite einer Reifenlauffläche der Form zur Vulkanisation vorgesehen ist.

## Revendications

1. Moule de vulcanisation possédant, à sa surface périphérique intérieure, une partie en creux (22) servant à former une partie d'appui (101) dans une partie bande de roulement d'un pneu, comprenant :
un trou (92) s'ouvrant au niveau d'une surface de paroi de ladite partie en creux (22) ;
un élément de formation d'un trou débouchant (90) qui est disposé de façon à être capable de faire saillie à partir dudit trou (92) vers un côté intérieur de ladite partie en creux (22) afin de former un trou débouchant (100) passant au travers de la partie d'appui (101) et
un moyen d'enfoncement pour enfoncer ledit élément de formation de trou débouchant (90) pour qu'il entre et sorte dudit trou (92) par rapport à ladite partie en creux (22).

2. Moule de vulcanisation comme revendiqué à la revendication 1, **caractérisé en ce que** ledit élément de formation d'un trou débouchant (90) a la forme d'une plaque mince dont la direction de l'épaisseur est une direction qui coupe une surface de contact avec le sol.

3. Moule de vulcanisation comme revendiqué à la revendication 1 ou 2, **caractérisé en ce que** ledit élément de formation d'un trou débouchant (90) et ledit trou (92) s'étendent en forme d'arc de cercle.

4. Moule de vulcanisation comme revendiqué dans l'une quelconque des revendications 1 à 3, **caractérisé en ce que** ledit trou (92) est ouvert au niveau d'une surface de paroi latérale de ladite partie en creux (22).

5. Moule de vulcanisation comme revendiqué dans l'une quelconque des revendications 1 à 3, **caractérisé en ce que** ledit trou (92) est ouvert au niveau d'une surface inférieure de ladite partie en creux (22).

6. Moule de vulcanisation comme revendiqué dans l'une quelconque des revendications 1 à 5, **caractérisé en ce que** ledit élément de formation d'un trou débouchant (90) est disposé parallèlement au plan équatorial dudit pneu.

7. Moule de vulcanisation comme revendiqué dans l'une quelconque des revendications 1 à 5, **caractérisé en ce que** ledit élément de formation d'un trou débouchant (90) est disposé parallèlement à un plan passant le long de la direction axiale du pneu.

8. Moule de vulcanisation comme revendiqué dans l'une quelconque des revendications 1 à 7, **caractérisé en ce que** ledit moyen d'enfoncement est disposé au niveau d'un côté de surface extérieure du moule de vulcanisation.

9. Moule de vulcanisation comme revendiqué dans l'une quelconque des revendications 1 à 8, **caractérisé en ce que** lesdits trous sont formés respectivement dans différentes surfaces de paroi de ladite partie en creux (22).

10. Procédé de vulcanisation d'un pneu servant à obtenir un pneu ayant une bande de roulement possédant une partie d'appui (101) dans laquelle une partie en creux (22) est formée,
dans lequel, en utilisant un moule de vulcanisation muni d'une partie en creux (22) servant à former une partie d'appui à la surface périphérique intérieure dudit moule, un trou (92) s'ouvrant au niveau d'une surface de paroi de ladite partie en creux et un élément de formation d'un trou débouchant (90) qui est disposé de façon à être capable de faire saillie à partir dudit trou (92) vers un côté intérieur de ladite partie en creux (22) afin de former un trou débouchant (100) passant au travers de la partie d'appui (101), ledit élément de formation d'un trou débouchant (90) est disposé pour faire saillie à partir dudit trou (92) vers le côté intérieur de ladite partie en creux (22) avant la vulcanisation du pneu et ledit élément de formation du trou débouchant (90) est extrait du pneu après que la vulcanisation du pneu est achevée.

11. Procédé comme revendiqué à la revendication 10, **caractérisé en ce que** ledit élément de formation d'un trou débouchant (90) se déplace linéairement.

12. Procédé comme revendiqué à la revendication 10, **caractérisé en ce que** ledit élément de formation d'un trou débouchant (90) se déplace le long d'une forme en arc de cercle.

13. Procédé comme revendiqué dans l'une quelconque des revendications 10 à 12, **caractérisé en ce que** ledit trou (92) est disposé au niveau d'un côté de surface latérale de pneu dudit moule de vulcanisation.

14. Procédé comme revendiqué dans l'une quelconque des revendications 10 à 12, **caractérisé en ce que** ledit trou (92) est disposé au niveau d'un côté de bande de roulement de pneu dudit moule de vulcanisation.
